# DEMANDE DE BREVET EUROPEEN

(11) **EP 4 516 447 A1**
(43) Date de publication de la demande: **05.03.2025**
(21) Numéro de dépôt: 23194901.7
(22) Date de dépôt: 01.09.2023
(51) Int. Cl.: B23Q 3/157, B23Q 39/02, B23Q 3/155, B23Q 39/00

(54) **MACHINE-OUTIL À COMMANDE NUMÉRIQUE COMPORTANT UNE TOURELLE MULTIBROCHES ET UN DISPOSITIF DE PRÉHENSION D OUTILS**

(71) Demandeur: ETA SA Manufacture Horlogère Suisse, 2540 Grenchen (CH)
(72) Inventeur: PHAM, Patric, 3427 Utzenstorf (CH); DONZÉ, Christophe, 2542 Pieterlen (CH)
(74) Mandataire: ICB SA

(57) **Abrégé**

L'invention concerne une machine-outil (10) à commande numérique comprenant une tourelle (20) multibroches dotée d'un corps (21) s'étendant selon un axe A-A entre une première extrémité par laquelle il est fixé à un bâti (11) de la machine-outil (10) et une seconde extrémité au niveau de laquelle il comporte une tête (23) mobile en rotation, la tête (23) comprenant au moins deux broches (24, 24', 24") porte-outils, chacune étant destinée à recevoir en engagement un outil (25, 25', 25") de coupe, les broches (24, 24', 24") occupant, selon la position angulaire de la tête (23), une position de travail dans laquelle elles sont destinées à réaliser une opération d'usinage d'une pièce maintenue en position dans un posage ou une position d'attente dans laquelle elles sont en retrait de ladite pièce, chacune desdites broches (24, 24', 24") étant configurée pour être pilotée indépendamment de l'autre afin d'immobiliser ou d'entraîner en rotation l'outil (25, 25', 25") qu'elle porte, quelle que soit la position qu'elle occupe, la machine-outil (10) comprenant en outre un dispositif de préhension (30) d'outils configuré pour extraire un outil (25', 25") à stocker porté par une broche (24', 24") en position d'attente et pour insérer dans ladite broche (24', 24") en position d'attente un outil de remplacement (25'").

## Description

### Domaine technique de l'invention

L'invention relève du domaine des machines-outils à commande numérique destinées à l'usinage de pièces préférentiellement micromécaniques et de celui des équipements de telles machines.

Plus particulièrement, l'invention concerne une machine-outil à commande numérique comportant une tourelle multibroches et un dispositif de préhension d'outils.

### Arrière-plan technologique

Les machines-outils à commande numérique sont destinées à produire des pièces en série, notamment par usinage, en suivant les consignes d'un programme informatique. Ces machines comportent un outil monté dans une broche porte-outil et sont généralement équipées d'un changeur d'outils afin d'échanger l'outil maintenu par la broche porte-outil pour l'adapter aux opérations d'usinage à réaliser sur la pièce maintenue en position dans un posage.

Lors d'un changement d'outils, la machine-outil n'est plus productive dans le sens où les opérations d'usinage sont interrompues. Il est donc recherché de minimiser la durée de changement d'outils. À cet effet, des changeurs d'outils ont été développés pour travailler au maximum en temps masqué et minimiser les temps de pause des machines-outils afin d'augmenter leur productivité.

Par exemple, on connait les tourelles multibroches comprenant une tête sur laquelle sont agencées plusieurs broches porte-outils parmi lesquelles une est active et les autres sont au repos. En particulier, la broche porte-outil active est en prise avec un mécanisme d'entraînement grâce à un système d'accouplement. Ainsi, entre deux opérations d'usinage, le changement d'outils peut être réalisé par désaccouplement de la broche porte-outil active, c'est-à-dire celle portant l'outil à changer, rotation de la tête de sorte à présenter la broche porte-outil suivante et accouplement de cette broche porte-outil avec le mécanisme d'entraînement.

Cette solution ne donne toutefois pas entière satisfaction dans la mesure où, bien qu'ils soient réduits, les temps de changement d'outils ne sont pas entièrement masqués. En effet, entre chaque changement d'outils, avec ce type de tourelle multibroches, il est nécessaire de freiner l'outil à changer avant de réaliser le changement d'outils et d'accélérer l'outil suivant une fois qu'il est accouplé au mécanisme d'entraînement, jusqu'à ce qu'il atteigne sa vitesse de rotation d'usinage. Ces tourelles multibroches requièrent également un certain laps de temps pour désaccoupler l'outil à changer, pivoter la tête et indexer l'outil suivant afin de l'aligner avec le système d'accouplement, puis réaliser l'accouplement. Aussi, cette solution est particulièrement complexe et onéreuse du fait du système d'accouplement.

Il existe des tourelles multibroches répondant à la problématique d'accélération et de freinage de broche porte-outil, dans lesquelles les outils sont tous entraînés en rotation, de façon synchrone. Ainsi, lors du changement d'outils, l'outil suivant est déjà entraîné à sa vitesse de rotation d'usinage et peut débuter l'opération d'usinage de la pièce. Ces tourelles multibroches engendrent cependant une consommation de grandes quantités d'énergie pour entraîner en rotation l'ensemble des outils de façon simultané. Par ailleurs, la vitesse de rotation maximale des outils qu'elles portent est relativement limitée du fait de la chaine cinématique de transmission de mouvement.

Globalement, qu'elles entraînent en rotation les outils qu'elles portent de façon individuelle ou simultanée, les tourelles multibroches de l'état de la technique sont volumineuses, ce qui engendre des moments d'inertie importants et augmente le risque de collision entre le posage et les outils portés par la tourelle.

On comprend qu'en plus des inconvénients précités, ces solutions ne sont pas adaptés pour l'usinage de pièces micromécaniques.

### Résumé de l'invention

L'invention résout les inconvénients précités en proposant une solution permettant de masquer complètement les temps de changement d'outils et les temps de remplacement d'outils, notamment en masquant les phases d'accélération et de décélération des outils et en masquant les temps de coopération entre la tourelle multibroche et le dispositif de préhension d'outils.

À cet effet, la présente invention concerne une machine-outil à commande numérique comprenant une tourelle multibroches dotée d'un corps s'étendant selon un axe A-A entre une première extrémité par laquelle il est fixé à un bâti de la machine-outil et une seconde extrémité au niveau de laquelle il comporte une tête mobile en rotation. La tête comprend au moins deux broches porte-outils, chacune étant destinée à recevoir en engagement un outil de coupe, les broches occupant, selon la position angulaire de la tête, une position de travail dans laquelle elles sont destinées à réaliser une opération d'usinage d'une pièce maintenue en position dans un posage ou une position d'attente dans laquelle elles sont en retrait de ladite pièce. Chacune des broches est configurée pour être pilotée indépendamment de l'autre afin d'immobiliser ou d'entraîner en rotation l'outil qu'elle porte, quelle que soit la position qu'elle occupe. La machine-outil comprend en outre un dispositif de préhension d'outils configuré pour interagir avec une broche en position d'attente de sorte à extraire un outil à stocker porté par ladite broche et pour insérer dans ladite broche un outil de remplacement.

Les broches étant asservies de manière indépendante, il est rendu possible d'accélérer et de décélérer les broches en temps masqué. La présente invention permet donc de réaliser un changement d'outils avec un temps mort réduit uniquement à la durée de la rotation de la tête jusqu'à ce que l'outil suivant entre en contact avec la pièce à usiner tout en permettant de réaliser le remplacement d'un outil en temps masqué, lors d'une opération d'usinage, sur une broche en position d'attente.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le dispositif de préhension comporte un magasin d'outils maintenu en porte à faux par une structure porteuse fixée sur le corps de la tourelle. Le magasin comprend un barillet de stockage présentant un degré de liberté en rotation selon un axe C-C.

Dans des modes particuliers de réalisation, le magasin est configuré de sorte que l'axe C-C est parallèle à un axe longitudinal B'-B' ou B"-B" de la broche avec laquelle il interagit, ledit barillet de stockage et ladite broche étant mobiles en translation l'un par rapport à l'autre selon l'axe C-C.

Dans des modes particuliers de réalisation, le magasin présente au moins un degré de liberté en translation ou en rotation lui permettant d'être mobile entre :
- une position active dans laquelle il est au voisinage immédiat de la broche avec laquelle il est configuré pour interagir, et
- une position de dégagement dans laquelle il est plus éloigné de l'axe A-A que lorsqu'il est dans la position active.

Dans des modes particuliers de réalisation, la structure porteuse comporte un organe de jonction fixé au corps de la tourelle et relié au magasin par un bras, ledit bras étant configuré pour déplacer le magasin entre ses positions active et de dégagement.

Dans des modes particuliers de réalisation, le bras présente une portion distale fixée au magasin reliée par une glissière ou par un pivot à une portion proximale fixée à l'organe de jonction.

Dans des modes particuliers de réalisation, la machine-outil comprend au moins deux broches occupant une position d'attente, l'organe de jonction étant fixé sur le corps de la tourelle de manière mobile en rotation selon l'axe A-A, de sorte à entraîner le magasin depuis l'une jusqu'à l'autre des broches occupant la position d'attente.

Dans des modes particuliers de réalisation, le magasin présente un degré de mobilité en translation selon un axe parallèle à l'axe A-A par rapport à l'organe de jonction, de sorte à éloigner davantage ledit magasin de la tête de la tourelle lorsqu'il occupe la position de dégagement.

Dans des modes particuliers de réalisation, l'organe de jonction est fixé sur le corps de la tourelle de manière mobile en coulissement selon l'axe A-A, de sorte à éloigner davantage ledit magasin de la tête de la tourelle lorsqu'il occupe la position de dégagement.

Dans des modes particuliers de réalisation, le corps de la tourelle est fixé rigidement au bâti, c'est-à-dire sans degré de liberté, de même que le magasin, ce dernier comprenant un barillet de stockage. Le dispositif de préhension comporte un organe de préhension sous la forme d'un module de transfert mobile entre une position dans laquelle il est destiné à interagir avec le magasin et une position dans laquelle il est destiné à interagir avec une des broches en attente, le module de transfert étant doté d'une fourche de préhension apte à saisir un outil.

Dans des modes particuliers de réalisation, le module de transfert comporte au moins deux fourches, et est configuré de sorte que, lorsqu'il occupe la première position, il est apte à être entraîné de sorte que, de façon successive, l'une des fourches soit apte à extraire un outil de remplacement d'un logement et qu'une autre fourches soit apte à disposer, dans le logement, un outil à stocker préalablement retiré d'une broche, et que, lorsqu'il occupe la seconde position, il est apte à être entraîné de sorte que, de façon successive, l'un des fourches soit apte à retirer d'une autre broche un outil à stocker et qu'une autre fourche soit apte à insérer dans ladite broche l'outil de remplacement.

Dans des modes particuliers de réalisation, le magasin comporte un carter de protection pourvu d'une fente comportant une portion axiale et une portion radiale permettant l'introduction, dans le magasin, de l'outil à stocker et de la broche, et permettant le dégagement dudit magasin une fois l'outil remplacé.

Dans des modes particuliers de réalisation, la portion radiale de la fente est conformée de sorte à épouser la forme de la broche lors du remplacement de l'outil.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'une tourelle multibroches selon un exemple de réalisation préféré de l'invention avec un dispositif de préhension d'outils apte à remplacer des outils portés par une ou des broches de la tourelle ;
- la figure 2 représente une vue de la tourelle de la figure 1, orientée selon l'axe longitudinal du corps de la tourelle ;
- la figure 3 représente une vue en perspective de la tourelle de la figure 1 comprenant un dispositif de préhension d'outils de taille réduite, ladite figure laissant apparaitre certains degrés de mobilité envisageables du dispositif de préhension d'outils ;
- les figures 4 et 5 représentent une vue en perspective d'une tourelle multibroches selon un autre exemple de réalisation de l'invention avec un dispositif de préhension agencé dans différentes positions.

On note que les figures ne sont pas nécessairement dessinées à l'échelle pour des raisons de clarté.

### Description détaillée de l'invention

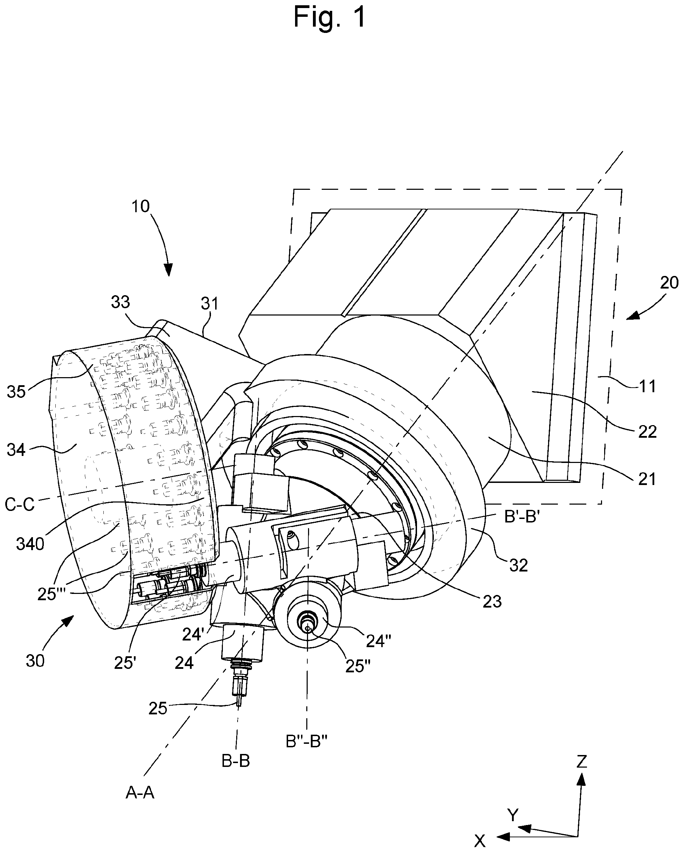

La présente invention concerne une machine-outil 10 à commande numérique comprenant, comme le montre la figure 1, une tourelle 20 multibroches destinée à l'usinage de pièces préférentiellement micromécaniques et un dispositif de préhension d'outils 30.

La tourelle 20 comprend un corps 21 s'étendant selon un axe longitudinal noté « axe A-A », comprenant à l'une de ses extrémités une embase 22 de fixation à un bâti 11 de la machine-outil 10 et à l'autre extrémité une tête 23 mobile en rotation autour d'un axe confondu avec l'axe A-A dans l'exemple de réalisation de l'invention représenté sur les figures.

La tête 23 comporte au moins deux broches 24, 24' ou 24" porte-outils, chacune destinée à recevoir en engagement un outil 25, 25' ou 25". Selon la position angulaire de la tête 23, chaque broche 24, 24' et 24" occupe une position de travail, dans laquelle elle est destinée à réaliser une opération d'usinage d'une pièce maintenue en position dans un posage, ou une position d'attente, dans laquelle elle est en retrait de la pièce. Sur les figures 1 à 4, la tourelle 20 comporte trois broches 24, 24' et 24", dont une est en position de travail et deux sont en position d'attente. On comprend ici que la rotation de la tête 23 provoque le changement d'outils, l'outil 25 occupant la position de travail étant déplacé dans une position d'attente et un des outils 25' ou 25" en position d'attente étant déplacé en position de travail.

Il y a lieu de noter que la tourelle 20 peut être entraînée en translation, par exemple si l'embase 22 est fixée à un chariot de la machine-outil 10 (non représenté sur les figures) mobile selon au moins un degré de liberté en translation, préférentiellement selon trois degrés de liberté en translation en référence à un trièdre XYZ.

Alternativement, la tourelle 20 peut être immobile, par exemple si l'embase 22 est fixée directement au bâti 11 de la machine-outil 10. Le posage est alors pourvu de degrés de libertés précités, par exemple trois degrés de liberté en translation, respectivement selon les directions X, Y et Z et éventuellement un ou deux degrés de liberté en rotation selon X et/ou Y.

Les broches 24, 24' et 24" sont avantageusement configurées de sorte à être pilotées indépendamment les unes des autres afin d'entraîner en rotation ou afin d'immobiliser l'outil 25, 25' ou 25" qu'elles portent. Cette caractéristique est particulièrement avantageuse lors d'un changement d'outils. Préférentiellement, les broches 24, 24' et 24" sont des broches de type motorisées, aussi appelées « électrobroches », et comprennent chacune un moteur qui lui est propre pour l'entraînement en rotation ou l'immobilisation de l'outil 25, 25' ou 25" qu'elles portent.

En particulier, afin de changer un premier outil 25 réalisant une première phase d'usinage, par un second outil 25' ou 25" destiné à réaliser une seconde phase d'usinage, ce dernier est entrainé en rotation, avant la fin de la première phase d'usinage, jusqu'à atteindre une vitesse de rotation propre à la seconde phase d'usinage.

Le premier outil 25 est engagé dans la broche 24 en position de travail et le second outil 25' ou 25" est engagé dans une des broches 24' ou 24" en position d'attente.

Une fois la première phase d'usinage achevée, la tête 23 est pivotée de sorte à entraîner en position d'attente la broche 24 qui était en position de travail, et de sorte à entraîner en position de travail la broche 24' ou 24" qui était en position d'attente. La seconde phase d'usinage débute alors immédiatement, grâce au fait que le second outil 25' ou 25" ait atteint sa vitesse de rotation d'usinage lorsque que la broche 24' ou 24" dans laquelle il est engagé était en position d'attente. La broche 24 portant le premier outil 25 étant maintenant en position d'attente, ce dernier est alors immobilisé en rotation.

Ainsi, la mise en rotation du second outil 25' ou 25" et l'arrêt en rotation du premier outil 25 étant réalisés en temps masqué, le changement d'outils est réalisé avec un temps mort réduit uniquement à la durée de la rotation de la tête 23 selon l'axe A-A.

Chaque broche 24, 24' et 24" s'étend respectivement selon un axe longitudinal noté « axe B-B », « axe B'-B' » et « axe B"-B" », constituant également leur axe de rotation, tel qu'illustré sur la figure 1. Comme visible sur les figures 1, 3, 4 et 5d, dans la position de travail, la broche 24 est préférentiellement orientée de sorte que son axe B-B soit parallèle à un axe vertical.

Avantageusement, la présente invention permet de remplacer un outil 25' ou 25" à stocker porté par l'une des broches 24' ou 24" en position d'attente et immobile en rotation lors de la réalisation d'une opération d'usinage. En effet, la machine-outil 10 comporte un dispositif de préhension 30 d'outils apte à extraire d'une broche 24' ou 24" l'outil 25' ou 25" à stocker et à insérer dans ladite broche 24' ou 24" un nouvel outil, appelé « outil de remplacement » 25'" dans la suite du texte.

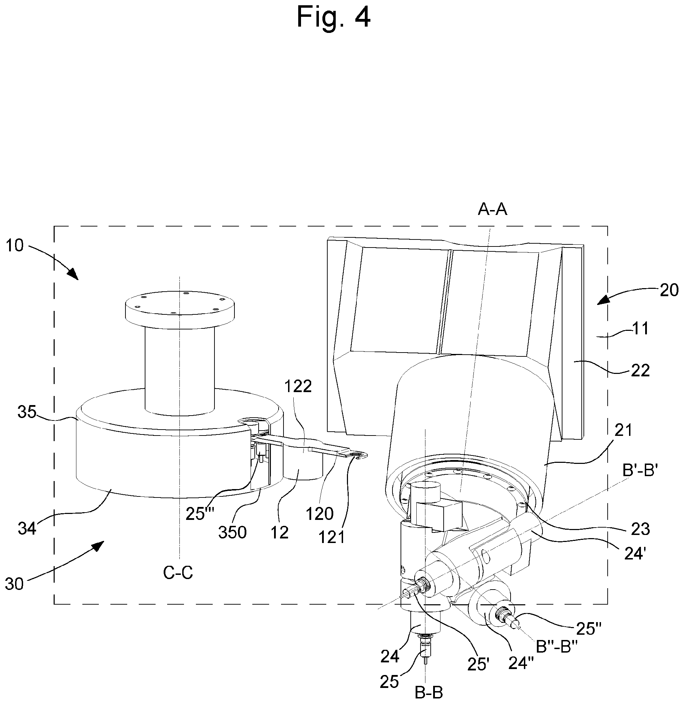

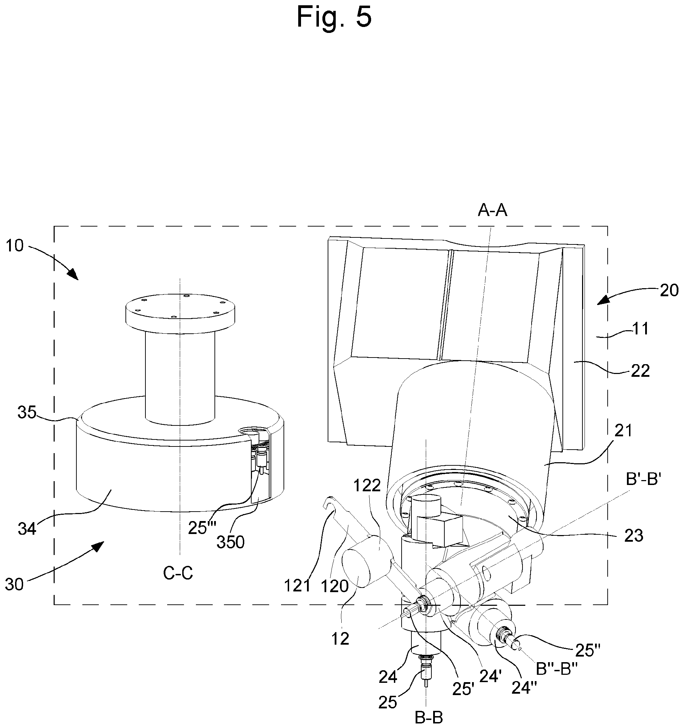

Le dispositif de préhension 30 peut être fixé sur le corps 21 de la tourelle 20, comme le montrent les figures 1 à 3, par exemple si l'embase 22 est fixée à un chariot mobile par rapport au bâti 11, ou bien il peut être directement fixé sur le bâti 11 si la tourelle 20 est immobile par rapport au bâti 11, comme le montrent les figures 4 et 5.

Comme visible sur les figures 1 à 4, le dispositif de préhension 30 comporte un magasin 34 d'outils maintenu en porte à faux par une structure porteuse 31. Le magasin 34 comporte un barillet de stockage 340 d'outils comprenant une pluralité de logements 341 destinés à recevoir des outils de remplacement 25'" ou des outils remplacés. En particulier, les logements 341 peuvent comporter chacun une ouverture débouchant radialement par laquelle ils sont aptes à recevoir en engagement un outil de remplacement 25'" ou un outil remplacé.

Le barillet de stockage 340 peut prendre dans cet exemple de réalisation la forme d'un disque sur la périphérie duquel les logements 341 sont régulièrement répartis.

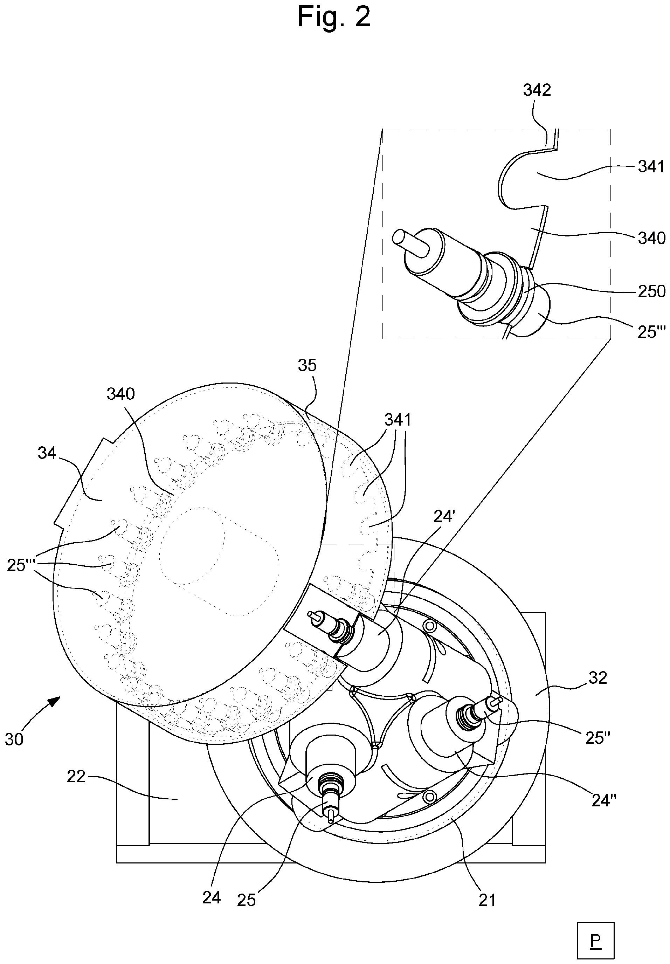

Chaque logement 341 peut comprendre un organe de préhension formé par une pince 342, représentée schématiquement sur la vue de détail de la figure 2. Chaque pince 342 présente des propriétés de déformation élastique de sorte à pouvoir recevoir un outil en engagement et à la maintenir en position dans le logement 341 par friction. En particulier, les outils peuvent comporter une gorge annulaire 250 dans laquelle est destinée à s'engager la pince 342. Il est à noter que de tels pinces élastiques sont connues en tant que telles de l'homme du métier et leur conception est à sa portée.

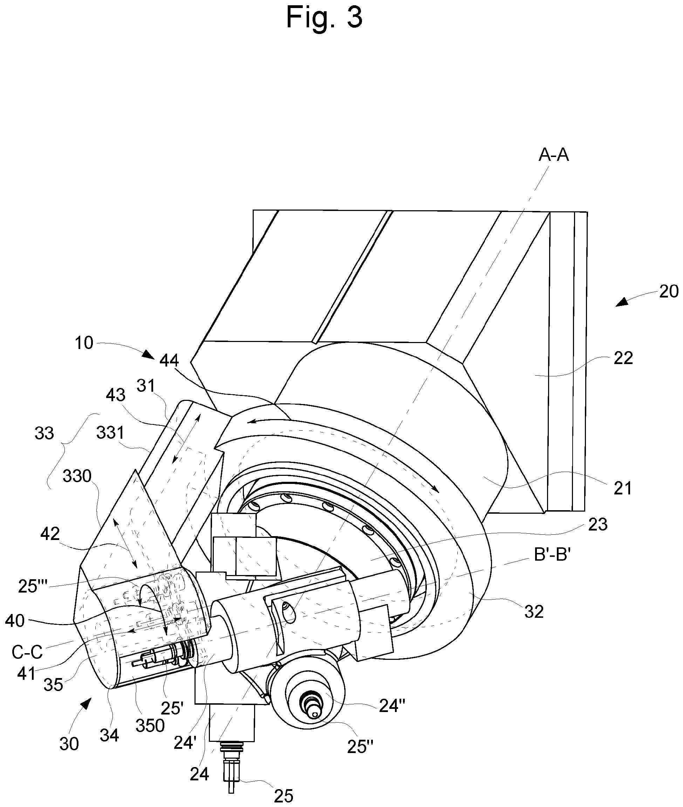

Dans l'exemple de réalisation de l'invention représenté sur les figures 1 à 3, le barillet de stockage 340 présente un degré de liberté en rotation selon un axe C-C parallèle à l'axe B'-B' ou l'axe B"-B" d'une des broches 24' ou 24" en position d'attente, en particulier la broche 24', avec laquelle il interagit, de sorte à pouvoir présenter en regard de ladite broche 24' chacun des logements 341 qu'il comporte. Ce degré de liberté est représenté par la flèche 40 sur la figure 3.

Aussi, le barillet de stockage 340 et ladite broche 24' avec laquelle il interagit sont mobiles en translation l'un par rapport à l'autre selon un axe parallèle à l'axe B'-B' de la broche 24'. Cette mobilité relative est préférentiellement assurée par un degré de liberté en translation du barillet de stockage 340 selon l'axe C-C, tel que matérialisé par la flèche 41 sur la figure 3. Alternativement, cette mobilité relative peut être assurée par un degré de liberté en translation selon l'axe B'-B' de la broche 24' en position d'attente.

Plus précisément, afin de remplacer l'outil 25' engagé dans la broche 24' en position d'attente par un outil de remplacement 25'" disposé dans le barillet de stockage 340, ce dernier est pivoté de sorte à présenter un logement 341 vide en regard de l'outil 25' à stocker, puis le barillet de stockage 340 est déplacé en translation vers ladite broche 24' de sorte à introduire l'outil 25' à stocker dans le logement 341. Lors de cette introduction de l'outil 25' à stocker dans le logement 341, la pince 342 de ce dernier se déforme jusqu'à s'engager dans la gorge annulaire 250 de l'outil 25' à stocker. Une translation du barillet de stockage 340 dans un sens opposé à la broche 24' permet ensuite de retirer ledit outil 25' à stocker. Afin d'insérer un outil de remplacement 25'" dans cette broche 24', le barillet de stockage 340 est pivoté jusqu'à aligner l'outil de remplacement 25'" avec la broche 24', puis il est déplacé en translation vers ladite broche 24' de sorte à engager ledit outil de remplacement 25'" dans ladite broche 24'. Un déplacement en translation dans une direction perpendiculaire à l'axe B'-B' permet de retirer l'outil de remplacement 25'" du logement 341 dans lequel il était disposé, ledit outil de remplacement 25'" étant à présent fixé dans ladite broche 24'.

Il y a lieu de noter que, si les logements 341 sont agencés de sorte que leur ouverture débouche de façon tangentielle ou orthoradiale relativement au barillet de stockage 340, l'engagement dans un logement 341 de l'outil 25' à stocker, ainsi que le retrait d'un logement 341 d'un outil de remplacement 25'", est réalisé par une rotation du barillet de stockage 340 selon l'axe C-C, respectivement dans deux sens opposés.

De façon connue en soi par l'homme du métier, lors de ces opérations, la broche 24' est pilotée de sorte à libérer l'outil 25' à stocker lorsque le barillet de stockage 340 est déplacé en translation dans un sens opposé à la broche 24', et est configurée de sorte à verrouiller l'outil de remplacement 25'" lors de son introduction dans cette dernière.

Le magasin 34 peut avantageusement présenter un ou des degrés de liberté en translation ou en rotation lui permettant d'être mobile entre une position active et une position de dégagement. Dans la position active, le magasin 34 est au voisinage immédiat d'une broche 24' ou 24" en position d'attente, en particulier la broche 24', avec laquelle il est destiné à interagir de sorte à extraire un outil 25' à stocker porté par cette dernière ou à insérer un outil de remplacement 25'" dans ladite broche 24', tel que décrit précédemment. Dans la position de dégagement, le magasin 34 est plus éloigné de l'axe A-A, et donc de la tête 23, que lorsqu'il est dans la position active. Une telle disposition permet d'éviter tout risque de collision du magasin 34 lors d'une opération d'usinage ou lors d'une rotation de la tête 23 pour réaliser un changement d'outils.

À cet effet, la structure porteuse 31 est configurée pour déplacer le magasin 34 entre l'une et l'autre de ses positions active et de dégagement.

En particulier, comme le montrent les figures 1 à 3, la structure porteuse 31 peut comporter un organe de jonction 32 fixé au corps 21 de la tourelle 20 et relié au magasin 34 par un bras 33. Le bras 33 est configuré pour déplacer le magasin 34 entre ses positions active et de dégagement. Notamment, le bras 33 peut être configuré de sorte à déplacer le magasin 34 en translation selon un axe sensiblement orthogonal à l'axe B'-B' de la broche 24' en position d'attente avec laquelle le magasin 34 interagit, tel que représenté par une flèche 42 sur la figure 3.

Dans cet exemple de réalisation, le degré de mobilité en translation du magasin 34 selon l'axe sensiblement orthogonale à l'axe B'-B' de la broche 24' est fourni par une portion distale 330 du bras 33 fixée au magasin 34 et reliée par une glissière à une portion proximale 331 fixée à l'organe de jonction 32.

Alternativement, dans un exemple de réalisation non représenté sur les figures, pour le déplacer entre l'une et l'autre de ses positions active et de dégagement, le magasin 34 pourrait pivoter par rapport au bras 33, selon un axe de rotation parallèle à l'axe B'-B' de la broche 24' avec laquelle il est destiné à interagir, la portion distale 330 étant alors reliée par un pivot à la portion proximale 331. On comprend ici que la rotation du magasin est réalisée de sorte à entraîner le barillet de stockage 340 de manière excentrique, afin de l'éloigner ou de le rapprocher de la broche 24' avec laquelle il est destiné à interagir.

Préférentiellement, l'organe de jonction 32 est formé par un anneau de fixation agencé autour du corps 21 et fixé à ce dernier de manière mobile en rotation selon l'axe A-A, comme illustré par la flèche 44 sur la figue 3. La forme de l'anneau de fixation permet de répartir avantageusement les efforts en jeu. Cette mobilité permet de déplacer le magasin 34 de sorte à interagir successivement avec l'ensemble des broches 24' et 24" occupant une position d'attente, et par conséquent, de pouvoir réaliser un remplacement des outils 25' et 25" de ces broches sans rotation de la tête 23 de la tourelle 20.

Avantageusement, le magasin 34 peut présenter un degré de mobilité en translation selon un axe parallèle à l'axe A-A, par rapport à l'organe de jonction 32, grâce au bras 33, de sorte à éloigner davantage le magasin 34 de la tête 23 lorsqu'il est en position de dégagement. Notamment, comme l'illustre schématiquement la figure 3 par une flèche 43, la portion proximale 331 du bras 33 peut être fixée à l'organe de jonction 32 de manière mobile en translation selon un axe parallèle à l'axe A-A.

Alternativement, l'organe de jonction 32 peut être fixé sur le corps 21 de la tourelle 20 de manière mobile en coulissement selon l'axe A-A.

Dans l'exemple de réalisation de l'invention représenté sur les figures 4 et 5, le corps 21 de la tourelle 20 est fixé rigidement au bâti 11, c'est-à-dire sans degré de liberté, de même que le magasin 34, ce dernier pouvant être fixé directement sur le bâti 11 ou sur le corps 21 de la tourelle 20. Dans cet exemple de réalisation, l'organe de préhension est sous la forme d'un module de transfert 12 mobile entre une première position, visible sur la figure 4, dans laquelle il interagi avec le magasin 34 et une seconde position, visible sur la figure 5, dans laquelle il interagi avec une des broches 24' ou 24" en position d'attente, en particulier la broche 24'.

Plus précisément, le module de transfert 12 est doté d'une fourche 120 de préhension s'étendant depuis un corps 122 et étant apte à saisir un outil 25' à stocker logé dans la broche 24' en position d'attente avec laquelle le module de transfert 12 interagi lorsqu'il est en seconde position et à libérer cet outil 25' lorsque ce dernier est disposé dans un logement 341 du barillet de stockage 340 et lorsque le module de transfert 12 est dans sa première position. La fourche 120 est également apte à saisir un outil de remplacement 25'" lorsque le module de transfert 12 est dans sa première position, de sorte à l'extraire de son logement 341 et à le libérer lorsque l'outil de remplacement 25'" est engagé dans la broche 24', lorsque le module de transfert 12 est dans sa seconde position.

Il y a lieu de noter que le module de transfert 12 est configuré pour être mobile selon un axe radial relativement au magasin 34 afin d'introduire un outil 25' à stocker dans un logement 341 du barillet de stockage 340 ou d'extraire un outil de remplacement 25'" d'un logement 341. En outre, le module de transfert 12 est configuré de manière à pouvoir être déplacé en translation, d'une part, selon un axe parallèle à l'axe B'-B' de la broche 24' avec laquelle il est destiné à interagir de sorte à extraire de cette dernière un outil 25' à stocker ou d'y introduire un outil de remplacement 25'", et d'autre part, selon un axe orthogonal à l'axe B'-B' pour engager la fourche 120 dans un outil 25' à stocker ou pour dégager la fourche 120 d'un outil de remplacement 25‴. Par ailleurs, le module de transfert 12 présente un degré de liberté en rotation de sorte que la fourche 120 soit agencée successivement en regard d'un logement 341 et en regard de la broche 24' en position d'attente.

Par exemple, tel qu'illustré sur les figures 4 et 5, la fourche 120 peut comprendre à une extrémité libre une encoche 121 destinée à s'engager dans une seconde gorge annulaire de l'outil (non représentée sur les figures), parallèle à la gorge 250, pour fixer ce dernier au module de transfert 12 lors de ses déplacements entre ses première et seconde positions. Une telle gorge annulaire est, en tant que telle, connue de l'homme du métier. Bien entendu, l'encoche 121 et/ou la second gorge annulaire présente une capacité de déformation élastique afin d'assurer le maintien de l'outil par la fourche 120.

Comme visible sur les figures 4 et 5, le module de transfert 12 peut comporter au moins deux fourches 120, par exemple agencées de manière que l'une soit diamétralement opposée à l'autre par rapport au corps 122. De manière analogue, si le module de transfert 12 comporte plus de deux fourches 120, celles-ci peuvent avantageusement être réparties régulièrement autour du corps 122. Cette disposition permet d'optimiser le temps de déplacement du module de transfert 12 dans la mesure où, lorsqu'il occupe la première position, le module de transfert 12 peut être entraîné de sorte que, de façon successive, l'une des fourches 120 extrait un outil de remplacement 25'" d'un logement 341 et que l'autre dispose, dans le logement 341, un outil 25" à stocker préalablement retiré de la broche 24". De manière analogue et préférentielle, lorsque le module de transfert 12 occupe la seconde position, il peut être entraîné de sorte que, de façon successive, l'un des fourches 120 retire de la broche 24' un outil 25' à stocker et l'autre insère dans ladite broche 24' un outil de remplacement 25'".

Dans l'exemple de réalisation de l'invention dans lequel la tourelle est immobile par rapport au bâti 11, le posage présente des degrés de mobilité en translation et en rotation adaptés à exécuter un programme d'usinage.

Avantageusement, comme visible sur les figures 1 à 4, le magasin 34 comporte un carter de protection 35 représenté sur ces figures sous la forme de parois rigides présentant une forme de révolution. En raison des cinématiques décrites ci-dessus, le carter de protection 35 comporte une fente 350 à travers laquelle peut passer un outil 25', 25" ou 25'" lors du déplacement du magasin 34.

En particulier, la fente 350 comporte une portion axiale et une portion radiale permettant l'introduction, dans le magasin 34, de l'outil 25' à stocker et de la broche 24', et permettant le dégagement dudit magasin 34 une fois l'outil 25' ou 25" remplacé. Avantageusement, la portion radiale de la fente 350 est conformée de sorte à épouser la forme de la broche 24' lors du remplacement de l'outil 25' ou 25".

De manière plus générale, il est à noter que les modes de mise en oeuvre et de réalisation considérés ci-dessus ont été décrits à titre d'exemples non limitatifs, et que d'autres variantes sont par conséquent envisageables.

## Revendications

1. Machine-outil (10) à commande numérique **caractérisée en ce qu'**elle comprend une tourelle (20) multibroches dotée d'un corps (21) s'étendant selon un axe A-A entre une première extrémité par laquelle il est fixé à un bâti (11) de la machine-outil (10) et une seconde extrémité au niveau de laquelle il comporte une tête (23) mobile en rotation, la tête (23) comprenant au moins deux broches (24, 24', 24") porte-outils, chacune étant destinée à recevoir en engagement un outil (25, 25', 25") de coupe, les broches (24, 24', 24") occupant, selon la position angulaire de la tête (23), une position de travail dans laquelle elles sont destinées à réaliser une opération d'usinage d'une pièce maintenue en position dans un posage ou une position d'attente dans laquelle elles sont en retrait de ladite pièce, chacune desdites broches (24, 24', 24") étant configurée pour être pilotée indépendamment de l'autre afin d'immobiliser ou d'entraîner en rotation l'outil (25, 25', 25") qu'elle porte, quelle que soit la position qu'elle occupe, la machine-outil (10) comprenant en outre un dispositif de préhension (30) d'outils configuré pour interagir avec une broche (24', 24") en position d'attente de sorte à extraire un outil (25', 25") à stocker porté par ladite broche (24', 24") et de sorte à insérer dans ladite broche (24', 24") un outil de remplacement (25'").

2. Machine-outil (10) selon la revendication 1, dans laquelle le dispositif de préhension (30) comporte un magasin (34) d'outils maintenu en porte à faux par une structure porteuse (31) fixée sur le corps (21) de la tourelle (20), le magasin (34) comprenant un barillet de stockage (340) présentant un degré de liberté en rotation selon un axe C-C.

3. Machine-outil (10) selon la revendication 2, dans laquelle le magasin (34) est configuré de sorte que l'axe C-C est parallèle à un axe longitudinal B'-B' ou B"-B" de la broche (24', 24") en position d'attente avec laquelle il interagit, ledit barillet de stockage (340) et ladite broche (24', 24") étant mobiles en translation l'un par rapport à l'autre selon l'axe C-C.

4. Machine-outil (10) selon la revendication 2 ou 3, dans laquelle le magasin (34) présente au moins un degré de liberté en translation ou en rotation lui permettant d'être mobile entre :
- une position active dans laquelle il est au voisinage immédiat de la broche (24', 24") avec laquelle il est configuré pour interagir, et
- une position de dégagement dans laquelle il est plus éloigné de l'axe A-A que lorsqu'il est dans la position active.

5. Machine-outil (10) selon la revendication 4, dans laquelle la structure porteuse (31) comporte un organe de jonction (32) fixé au corps (21) de la tourelle (20) et relié au magasin (34) par un bras (33), ledit bras (33) étant configuré pour déplacer le magasin (34) entre ses positions active et de dégagement.

6. Machine-outil (10) selon la revendication 5, dans laquelle le bras (33) présente une portion distale (330) fixée au magasin (34) reliée par une glissière ou par un pivot à une portion proximale (331) fixée à l'organe de jonction (32).

7. Machine-outil (10) selon la revendication 5 ou 6, comprenant au moins deux broches (24', 24") occupant une position d'attente, l'organe de jonction (32) étant fixé sur le corps (21) de la tourelle (20) de manière mobile en rotation selon l'axe A-A, de sorte à entraîner le magasin (34) depuis l'une jusqu'à l'autre des broches (24', 24") occupant la position d'attente.

8. Machine-outil (10) selon l'une des revendications 5 à 7, dans laquelle le magasin (34) présente un degré de mobilité en translation selon un axe parallèle à l'axe A-A par rapport à l'organe de jonction (32), de sorte à éloigner davantage ledit magasin de la tête de la tourelle lorsqu'il occupe la position de dégagement.

9. Machine-outil (10) selon la revendication 5 à 7, dans laquelle l'organe de jonction (32) est fixé sur le corps (21) de la tourelle (20) de manière mobile en coulissement selon l'axe A-A, de sorte à éloigner davantage ledit magasin de la tête de la tourelle lorsqu'il occupe la position de dégagement.

10. Machine-outil (10) à commande numérique selon la revendication 1, dans laquelle le corps (21) de la tourelle (20) est fixé rigidement au bâti (11), c'est-à-dire sans degré de liberté, de même que le magasin (34), ce dernier comprenant un barillet de stockage (340), le dispositif de préhension (30) comportant un organe de préhension sous la forme d'un module de transfert (12) mobile entre une première position dans laquelle il est destiné à interagir avec le magasin (34) et une seconde position dans laquelle il est destiné à interagir avec une des broches (24', 24") en attente, le module de transfert (12) étant doté d'au moins une fourche (120) de préhension apte à saisir un outil (25, 25', 25", 25"').

11. Machine-outil (10) à commande numérique selon la revendication 10, dans laquelle le module de transfert (12) comporte au moins deux fourches (120), ledit module de transfert étant configuré de sorte que, lorsqu'il occupe la première position, il est apte à être entraîné de sorte que, de façon successive, l'une des fourches (120) soit apte à extraire un outil de remplacement (25‴) d'un logement (341) et qu'une autre fourches (120) soit apte à disposer, dans le logement (341), un outil (25") à stocker préalablement retiré d'une broche (24"), et que, lorsqu'il occupe la seconde position, il est apte à être entraîné de sorte que, de façon successive, l'un des fourches (120) soit apte à retirer d'une autre broche (24') un outil (25') à stocker et qu'une autre fourche (120) soit apte à insérer dans ladite broche (24') l'outil de remplacement (25'").

12. Machine-outil (10) selon l'une des revendications 1 à 11, dans laquelle le magasin (34) comporte un carter de protection (35) pourvu d'une fente (350) comportant une portion axiale et une portion radiale permettant l'introduction, dans le magasin (34), de l'outil (25', 25") à stocker et de la broche (24', 24"), et permettant le dégagement dudit magasin (34) une fois l'outil (25', 25") remplacé.

13. Machine-outil (10) selon la revendication 12, dans laquelle la portion radiale de la fente (350) est conformée de sorte à épouser la forme de la broche (24', 24") lors du remplacement de l'outil (25', 25").
